# EUROPEAN PATENT SPECIFICATION

(11) **EP 3 018 074 B1**
(45) Date of publication and mention of the grant of the patent: **05.07.2017**
(21) Application number: 14753345.9
(22) Date of filing: 04.07.2014
(51) Int. Cl.: B65D 85/804

(54) **PORTION PACKAGE AND A SISTEM FOR PREPARATION OF BEVERAGES USING SAID CARTRIDGES AND A PROCESS USING IT**
PORTIONSPACKUNG UND SYSTEM FÜR DIE ZUBEREITUNG VON GETRÄNKEN MIT DIESEN PACKUNGEN UND EIN PROZESS FÜR DIESES SYSTEM
CAPSULE ET SYSTÈME POUR LA PRÉPARATION DE BOISSONS ET PROCÉDÉ UTILISANT LEDIT SYSTÈME

(30) Priority: 05.07.2013 PT 10704413
(43) Date of publication of application: 11.05.2016
(73) Proprietor: Novadelta-Comércio e Industria de Cafés, S.A., 1950-709 Lisboa (PT)
(72) Inventor: NABEIRO, Rui Miguel, 7370-112 Campo Maior (PT)
(74) Representative: Miranda de Sousa, João Paulo Vaz
(86) International application number: PCT/PT2014/000045
(87) International publication number: WO 2015/002561

(56) References cited:
- EP-A1- 1 555 218
- EP-A1- 2 239 211
- WO-A1-2013/076381
- WO-A2-2005/066040

## Description

### Field of the invention

The present invention refers to the field of portion packages used for the preparation of edible products, notably of beverages based upon the extraction of respective precursor substances by means of a pressurized fluid flow.

The present invention further refers to a system and to a process for preparation of beverages such as for example coffee of the espresso type, tea and similar, by means of extracting a portion package.

### Background of the invention

The prior art includes solutions relating to portion packages containing a given quantity of at least one edible product inside an interior volume, and configured so as to be processed in an extraction device provided in a respective beverage preparation machine, such as for example an espresso coffee machine. In particular, there are known individual portion packages in the form of pod provided in a substantially flexible material or in the form of capsule provided in a substantially rigid material.

In this context, there are known flexible pods of substantially symmetric construction, but typically provided in a filter material not ensuring tightness to oxygen transfer, and there are known pods of asymmetric construction with substantially different flow entry and exit mechanisms. For example, it is known to inject a pressurized water flow by means of mechanic perforation of the recipient envelope on the respective entry side. The document EP 1273528 B1 is an example of this approach. This solution presents disadvantages notably in terms of producing irregular flow passageways and of risks of dragging of fragments of rupture of the envelope by the flow, as well as risks of contamination of said perforation means with residues of edible substance as a result of successive extraction cycles.

Moreover, it is known, for example from the document EP 0521510 B1, to provide flow passageways as a result from the rupture of zones of weakened material in certain parts of the envelope of the capsule or pod. Further to this matter, there are also known several embodiments of such zones of weakened material such as for example from the documents EP 0806373 B1, EP 1557373 A1 and EP 2337753 B1, including zones of weakened material by means of material removal and zones of partial or total cut of the envelope thickness without material removal. These solutions do not disclose an integrated solution in the sense of providing said zones of weakened material with the better peripheral resistances and rupture configuration according to the characteristics of interaction of the flow on the entry and on the exit side, in particular in the case of substantially flexible construction materials such as those used in packages of pod type, whether provided individually or in a strip.

Moreover, there are known solutions of substantially similar construction dispositions between the entry and exit sides, presenting two construction elements disposed in adjacent manner and with open flow passageways disposed in mismatched manner. Examples are disclosed in documents EP 2239211 A1 and EP 2239212 A1. However, these solutions do not ensure oxygen tightness, unless by using additional materials or means with risks of dragging thereof by the pressurized flow.

The document EP 155218 A1 discloses a capsule presenting zones of weakened material in the flow exit wall only.

The document WO 2005/066040 A2 discloses a capsule including the possibility of presenting zones of weakened material in both entry and exits sides of the flow, and the document WO 2013/076381 A1 discloses a capsule that comprises a flow entry part in vaulted form presenting zones of weakened material of linear form and developing radially from the center.

There is therefore the need for an integrated solution of a portion package that provides substantial oxygen tightness and that is simple in construction terms, as well as provides certain types of flow interaction with the entry and exit sides, considered as advantageous for the preparation of different types of quality beverages, in particular espresso coffee.

### General description of the invention

The goal of the present invention is to provide a portion package for an individual portion of at least one edible substance to be used in the preparation of an edible product, notably of aromatic beverages including espresso coffee, tea and similar, by means of extraction from a pressurized fluid flow, that presents greater construction simplicity, thereby simplifying its production related aspects. In particular, said portion package presents envelope elements of substantially similar construction including at least one envelope layer provided with a plurality of zones of weakened material that only break so as to provide a flow passageway when submitted to a given upstream flow pressure, in particular a pressure bigger than the atmospheric pressure.

The objective of the present invention is to propose a portion package of the type described above that presents an envelope with two opposing sides respectively adapted for the entry and exit of the pressurized flow and with enhanced properties of interaction with the respective upstream pressurized fluid flow, including as a function of the respective upstream pressure conditions.

This objective is attained according to claim 1.

A related objective is that said enhanced interaction may be applied in portion packages presenting a substantially rigid or substantially flexible envelope.

A further objective is to propose a system for preparation of beverages including at least two portion packages according to the present invention and adapted for different beverages or for a beverage in preparations with different characteristics, as well as at least one beverage preparation machine including at least one extraction device adapted for processing said portion packages according to the present invention.

This objective is solved according to claim 12.

A further objective of the present invention is to propose a process for preparation of beverages based upon a system of preparation of beverages according to the present invention.

This objective is solved according to claim 13.

### Description of the Figures

The present invention shall now be explained in greater detail based upon preferred embodiments and the attached Figures.

The Figures show, in simplified schematic representations:
- Figure 1:: side cut (top) and plant view (bottom) of embodiments of portion packages (1, 1') of substantially rigid and substantially flexible construction;
- Figure 2:: side cut view of an embodiment of a portion package (1) according to the invention, including a detail view P01 of the flow entry side;
- Figure 3:: side cut view of an embodiment of a portion package (1) according to the invention, including a detail view P02 of the flow exit side;
- Figure 4:: plant views of the flow entry zone (top) and of the flow exit zone (bottom) of embodiments of portion packages (1, 1') according to the invention;
- Figure 5:: plant views of the flow entry zone (top) and of the flow exit zone (bottom) of embodiments of portion package (1, 1') according to the invention;
- Figure 6:: side cut (top) and plant views (bottom) of portion packages (1, 1') of respectively substantially rigid and substantially flexible construction, of a system for preparation of beverages according to the invention;
- Figure 7:: side view (on the left) and front view (on the right) of a machine (10) for preparation of beverages of a system (20) for preparation of beverages according to the invention;
- Figure 8:: side views of different steps in a process of preparation of beverages based upon a portion package (1) according to the invention.

### Detailed description of preferred embodiments of the invention

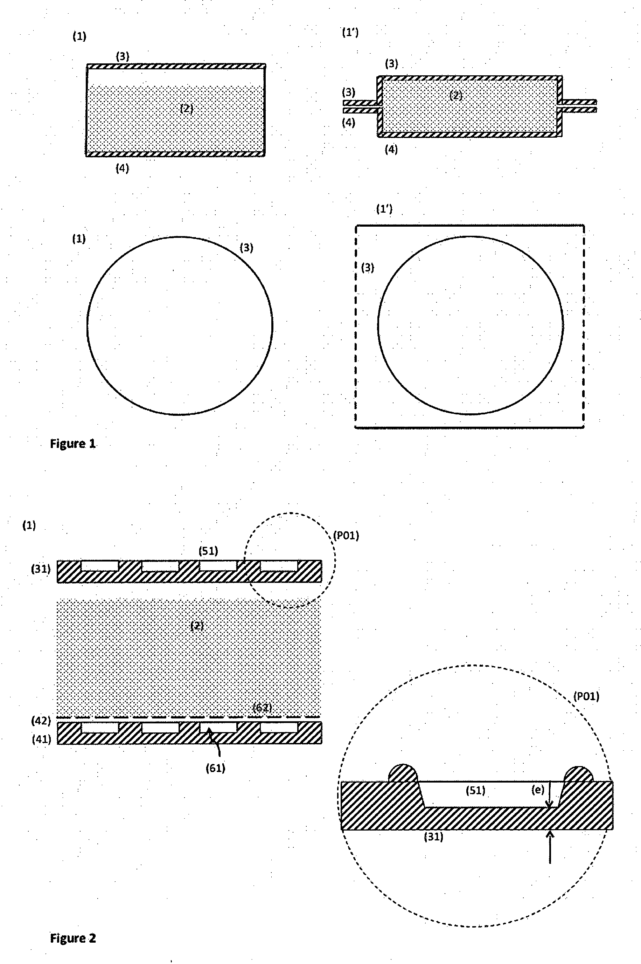

**Figure 1** represents the general construction of embodiments of a portion package (1) according to the present invention, including in the form of a capsule (1) of substantially rigid construction (on the left) and in the form of a pod (1') of substantially flexible construction, eventually provided in a continuous strip (not represented, only indicated by the dashed lines).

The portion package (1, 1') provides an interior volume for a dose (2) of at least one edible substance, including a precursor substance of an aromatic beverage, for example in a granulate form such as for example roasted grind coffee. The portion package (1, 1') presents a first and second envelope construction elements (3, 4) adapted so as to provide envelope surfaces respectively for entry and exit of the pressurized fluid flow to be used so as to prepare an edible product from said dose (2).

According to a preferred embodiment, said portions (2) are provided as a granulate preferentially compressed in a substantially stable volumetric form, and present a volume with a form ration between maximum width and height comprised between 0,5:1 and 4:1.

**Figure 2** presents a side view along a longitudinal direction of a construction detail of the zones of weakened material (51, 61) of a first embodiment of a portion package (1) according to the present invention.

In the top drawing, the first construction element (3), adapted for entry of the flow, presents one envelope layer (31) whereas the second construction element (4), adapted for the exit of the flow, likewise presents one envelope layers (41) but also an interior construction layer (42) disposed in adjacent manner.

The portion package (1) thus presents at least one envelope layer (31, 41) provided with a plurality of zones of weakened material (51, 61) preferentially provided by means of material removal, that is to say, by means of reduction of the thickness (e) of the respective envelope layer (31, 41). These zones.of weakened material (51, 61) are provided/so that, when submitted to a given hydraulic pressure, in particular bigger than the atmospheric pressure, exerted thereupon by the upstream flow, results in a rupture of material along thereof, thereby arising a flow passageway through a respective envelope layer.

The general construction of the portion package (1) thus results substantially simplified which advantageously reflects upon the production process, in particular in the case of substantially similar materials of the envelope layers (31, 41), for example synthetic materials, and substantially similar types of zones of weakened material (51, 61). Moreover, it is avoided the use of means for perforation of the package envelope, and ensured a substantially constant pattern and area of flow passageways, which translates into corresponding advantages in terms of the quality of the beverage obtained.

As represented in the detail P01, corresponding to a view along a greater extension of the zones of weakened material (51) in the envelope layer (31) disposed on the side oriented upstream, that is the flow entry side, these are preferentially produced by means of material removal, preferentially in a cross section of substantially trapezoidal format, with inherent reduction of the thickness (e) of the respective envelope layer (31). Moreover, according to a preferred embodiment, they are produced by means of displacement of material accumulating in a salient manner along the edge zones of said zone of weakened material (51), thus contributing to reinforcing the respective elastic pressure opposition resistance and thereby improving the rupture under pressure behavior. It is preferred when the material used in the envelope layer (31) on the flow entry side presents greater structural rigidity than the envelope layer (41) on the flow exit side.

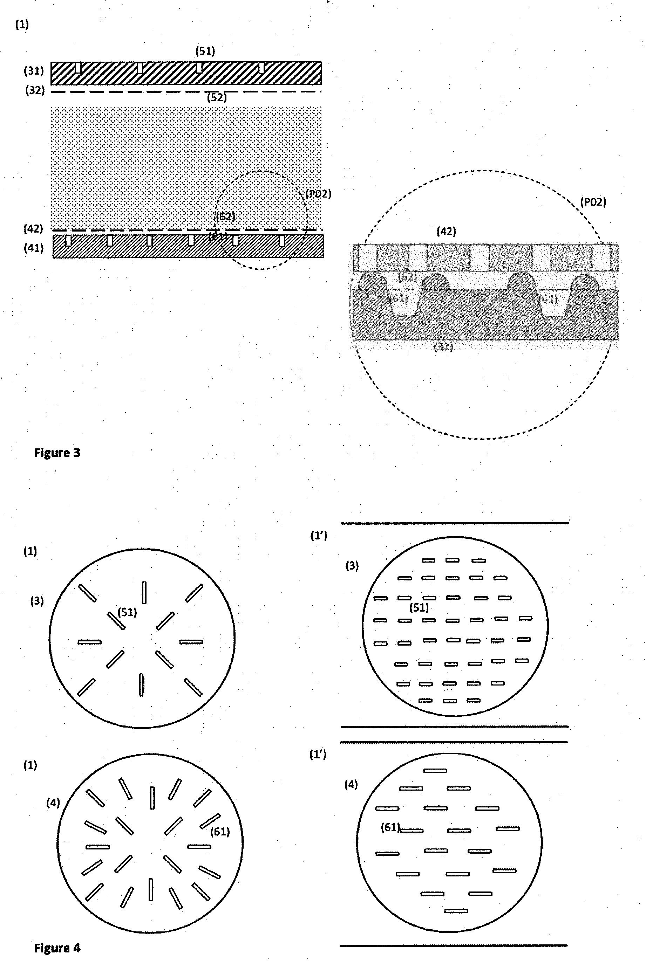

**Figure 3** shows a second embodiment of a portion package (1) according to the present invention, in this case presenting two interior construction layers (32, 42).

As represented in detail P02, corresponding to a front view of the cross section of the zones of weakened material (61), the construction elements (3, 4) - in the drawing only the construction element (4) adapted for the flow exit side - might further include an interior construction layer (32, 42) provided with respective flow passageways (52, 62) adapted for providing a filtering effect relative to the dose (2) and arranged in adjacent manner relative to the respective envelope layer (31, 41) of portion package (1). It is preferred when said flow passageways (52, 62) are provided with a characteristic dimension in the interval from 0,05 mm to 1 mm, so as to produce a filtering effect upon the flow.

According to a preferred embodiment, said interior construction layers (32, 42) are disposed adjacent to a respective envelope layer (31, 41) so that the interior construction layers (32, 42) exert a surface backpressure upon the envelope layers (31, 41). Moreover, the construction elements (3, 4) are provided so that the zones of weakened material (51, 61) and the flow passageways (52, 62) of the adjacent construction layers (31, 32; 41, 42) are mismatched at least when under atmospheric pressure.

**Figure 4** shows a first set of two preferred embodiments of the configuration of the zones of weakened material (51, 61) in two types of portion packages (1, 1') according to the invention (represented on the left and on the right). According to an inventive aspect, at least the form and/or the density of said zones of weakened material (51, 61) is different in the exterior envelope layers (31, 41), so as to thus better adjust to the expectable prevailing conditions of the pressurized flow in a respective zone.

As it can be observed, the zones of weakened material are in this case provided in the form of line segments, both on the entry side and on the exit side, thereby varying the distribution density thereof over respective exterior envelope layers (31, 41). It is preferred when the zones of weakened material (51, 61) are arranged in substantially radial pattern (drawings on the left) or orthogonal pattern (drawings on the right).

As it shall be easily understood by an expert in the field, said zones of weakened material (51, 61) are provided with design parameters, including a form, respective characteristic dimension, distribution pattern and distribution density, previously defined as a function of parameters including the type of beverage to be prepared as the prevailing flow pressures, in particular on the construction elements (3, 4).

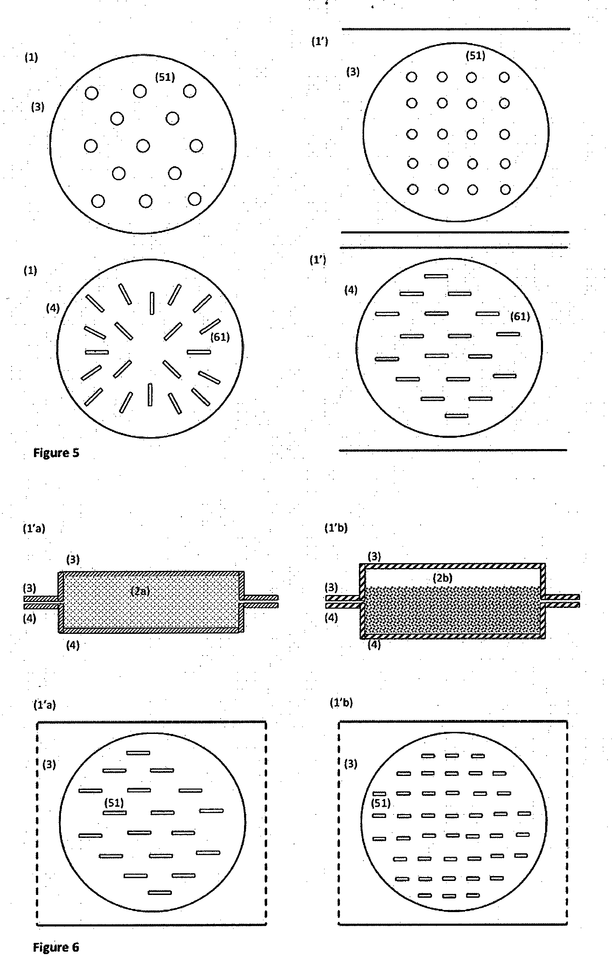

**Figure 5** shows a second set of preferred embodiments of the configuration of zones of weakened material (51, 61) in two types of portion packages (1, 1') according to the invention. In this case, and further according to an inventive aspect of the invention, the portion packages (1, 1') present zones of weakened material (51, 61) of different form in respective entry side (3) and exit side (4) of the pressurized fluid flow.

In particular, a first portion package (1) (on the left) presents zones of weakened material (51) in form of circular holes on the upstream oriented side, and zones of weakened material (61) in the form of line segments on the downstream oriented side. Moreover, the zones of weakened material (51) on the upstream oriented side present a distribution of rectangular matrix type, that is to say, distributed along lines and columns, whereas the downstream oriented zones of weakened material (61) present a distribution of circular matrix type, that is to say, distributed along substantially concentric radius.

A second portion package (1') likewise presents zones of weakened material (51, 61) in form of circular aperture on the upstream oriented side and of the linear type on the downstream oriented side, whereby both respective distributions are of the rectangular matrix type.

The invention thus provides a solution for different types of flow interaction with an exterior envelope layer, including on the entry side where there is mostly intended to pass into the interior of the portion package (1, 1') with a good flow distribution over a surface, and on the exit side where there is mostly required a given retention inside and vibrating membrane type of behavior with energy dissipation once the flow passageways are available.

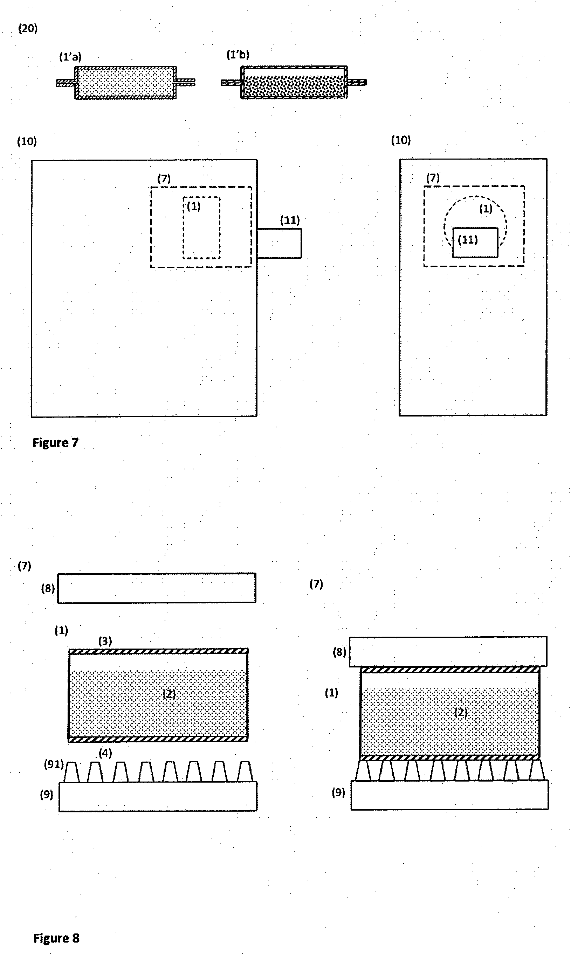

**Figure 6** shows two types of portion packages (1'a, 1'b) of a beverage preparation system (20) that further includes at least one beverage preparation machine (10) (vide **Figure 7**) comprising at least one extraction device (7) adapted for preparing a beverage from the doses (2a, 2b) contained in said portion packages (1'a, 1'b), for example roasted and grid coffee or tea leaves. As it can be observed, the two portion packages (1'a, 1'b) present different zones of weakened material (51, 61), in this case in terms of respective density, being previously configured so as to better adjust to the type of precursor substance and respective beverage. In fact, different beverage types may require different flow injection pressure values, so that it will be advantageous to configure a respective envelope layer (31) correspondingly. This same reasoning can be likewise applied to the flow exit side, and to particular characteristics that one intends to obtain from a beverage discharge (11) of a beverage preparation machine (10).

The present invention thus provides a beverage preparation system (20) that uses at least two types of substantially similar portion packages (1, 1'), with advantages in terms of respective production and only differentiating in terms of the provided zones of weakened material (51, 61) with advantages in terms of the beverage quality obtained.

**Figure 8** shows two successive steps in a process for preparing beverages based upon a system (20) according to the present invention. In particular, a step of supplying a portion package (1, 1') according to the invention to an extraction device (7) provided in a beverage preparation machine (10), or apparatus of similar functionality, and presenting two actuation parts (8, 9) adapted for proximal engagement with the construction elements (3, 4) of said portion package (1, 1'). In a following step, the actuation parts (8, 9) engage in proximity with said portion package (1, 1'), so as to inject a pressurized flow through the construction element (3) arranged upstream, and to collect the resulting beverage from the construction element (4) arranged downstream.

In particular, the provision of the pressurized fluid flow is done at a pressure bigger than the atmospheric pressure and sufficient to cause the rupture of said zones of weakened material (51) thereby providing a plurality of flow passageways through the construction element (3) arranged on the flow entry side.

According to an alternative embodiment, the action of the hydraulic pressure is exerted in points like manner, preferentially substantially aligned with a respective zone of weakened material (51). The beverage discharge results from the rupture of said zones of weakened material (61), by surface-like hydraulic pressure action upon the latter, thereby providing flow passageways distributed over the construction element (4) arranged on the flow exit side.

## Claims

1. **Portion package (1)** adapted for preparation of an edible product and configured so as to provide an interior volume for a portion (2) of at least one edible substance, and presenting two construction elements (3, 4) of similar form and dimension that comprise respective outside envelope layers (31, 41) adapted for entry and exit of a pressurized fluid flow, respectively, **characterized in that** both of said outside envelope layers (31, 41) present a plurality of zones of weakened material (51, 61), and said outside envelope layer (31) that is adapted for the flow entry side, presents zones of weakened material (51) with a different form and/or in a different density from the zones of weakened material (61) provided on said outside envelope layer (41) that is adapted for the flow exit side.

2. Portion package (1) according to claim 1, **characterized in that** said outside envelope layer (31) adapted for the flow entry side presents a smaller density of zones of weakened material (51) than said outside envelope layer (41) adapted for the flow exit side.

3. Portion package (1) according to claim 1 or 2, **characterized in that** said zones of weakened material (51, 61) develop along a single direction, presenting the form of a line segment, or develop in a confined local area, presenting a circular form.

4. Portion package (1) according to any one of claims 1 to 3, **characterized in that** said zones of weakened material (51, 61) are provided in a rectangular or circular pattern.

5. Portion package (1) according to any one of previous claims 1 to 4, **characterized in that** said zones of weakened material (51, 61) are provided over at least part, preferentially most part of the surface of respective outside envelope layer (31, 41).

6. Portion package (1) according to any one of previous claims 1 to 5, **characterized in that** said zones of weakened material (51, 61) are adapted so as to provide a flow passageway with a characteristic dimension in the interval of 0,1 mm to 20 mm, preferentially in the interval of 0,5 mm to 10 mm.

7. Portion package (1) according to any one of previous claims 1 to 6, **characterized in that** said zones of weakened material (51, 61) are provided as a localized weakness of the respective outside envelope layer (31, 41), preferentially with reduction of the thickness (e) of the respective outside envelope layer (31, 41), preferentially provided on the side that is respectively oriented upstream relative to the flow direction.

8. Portion package (1) according to any one of previous claims 1 to 7, **characterized in that** said zones of weakened material (51, 61) are provided by removal of material and/or displacement of material of the respective outside envelope layer (31, 41), preferentially with material accumulation in a salient manner relative to the surrounding outside surface, along at least most part of the extension of the edges of the cavity defining said zones of weakened material (51, 61).

9. Portion package (1) according to any one of previous claims 1 to 8, **characterized in that** said zones of weakened material (51, 61) are provide with a trapezoid-like cross section, preferentially with narrowing section along the flow direction.

10. Portion package (1) according to any one of previous claims 1 a 12, **characterized in that** said outside envelope layers (31, 41) are provided with a similar form and dimension in a folio-like format, preferentially in a different material, preferentially presenting a greater rigidity in the case of the outside envelope layer (31) adapted for the flow entry side.

11. Portion package (1) according to any one of previous claims, **characterized in that** said construction elements (3, 4) are provided in an individualized format corresponding to individual portion packages (1), or are provided in a strip-like format corresponding to a plurality of individual portion packages (1') provided on a common support.

12. **System (20)** for preparation of beverages including at least two portion packages (1a, 1b) as referred in any of previous claims 1 to 11 and presenting a similar form and dimension, and at least one machine for preparing beverages (10) including at least one extraction device (7) adapted for injecting a pressurized flow on said portion packages (1a, 1b) and collecting the resulting beverage flow,
**characterized**
**in that** said portion packages (1a, 1b) present zones of weakened material (51, 61) of different form and/or density on respective sides adapted for entry and exit of the pressurized flow, so as to prepare respectively different beverages or with respectively different characteristics.

13. **Process** of preparation of a beverage from a portion package (1) referred on any of claims 1 to 11 in a system of preparation of beverages (20) referred in claim 12, **characterized in that** it includes the steps:
- supplying portion package (1) to an extraction device (7) so that the actuation parts (8, 9) of said extraction device (7) may engage in surface with respective construction elements (3, 4) of said portion package (1),
- injecting a fluid flow at a previously defined temperature and pressure, so as to successively interact with the envelope layers (31, 41) of said portion package (1),
- discharging the resulting beverage,
- discharging said portion package (1) out of said extraction device (7),
whereby the interaction flow with the outside envelope layer (31) adapted for the flow entry side is provided at such a pressure, bigger than the atmospheric pressure, so as to actuate the rupture of zones of weakened material (51) thereby resulting in flow passageways through a respective construction element (3), and the interaction flow with the outside envelope layer (41) adapted for the flow exit side is provided at such a pressure, bigger than the atmospheric pressure, so as to actuate the rupture of zones of weakened material (61) thereby resulting in flow passageways through the respective construction element (4) **characterized**
**in that** the interaction flow resulting from the rupture of said zones of weakened material (51) provided on said outside envelope layer (31) adapted for the flow entry side is different from the interaction flow resulting from the rupture of said zones of weakened material (61) provided on said outside envelope layer (41) adapted for the flow exit side.

14. Process according to claim 13, **characterized in that** the actuation pressure required for said rupture of the zones of weakened material (61) of the construction element (4) on the exit side is similar or greater than the actuation pressure required for said rupture of the zones of weakened material (51) of the construction element (3) on the entry side, so that the interaction of the pressurized flow with the construction element (4) on the exit side lasts longer.

15. Process according to claims 13 or 14, **characterized in that** said flow passageways are only provided as long as prevails said pressure higher than the atmospheric pressure.

## Patentansprüche

1. **Portionspackung (1)** angepasst zur Zubereitung von einem essbaren Produkt und gestaltet so, um ein Inhaltsvolumen für eine Portion (2) von mindestens einer essbaren Substanz zu versorgen, und umfassend zwei Bauelemente (3, 4) von ähnlicher Form und Dimension, die entsprechende Außenhüllschichten (31, 41) umfassen angepasst entsprechend zur Eingang und Ausgang von einem Druckflüssigkeitsfluss, **dadurch gekennzeichnet, dass** beide genannte Außenhüllschichten (31, 41) eine Vielzahl von Zonen von geschwächtem Material (51, 61) umfassen, und
genannte Außenhüllschicht (31) angepasst für den Stromeingang Zonen von geschwächtem Material (51) mit verschiedener Form und/oder in einer verschiedenen Dichte von den Zonen von geschwächtem Material (61), vorhanden an genannter äußerlichen Hüllschicht (41) angepasst zum Stromausgang umfasst.

2. Portionspackung (1) gemäß Anspruch 1 **dadurch gekennzeichnet, dass** genannte Außenhüllschicht (31) angepasst für den Stromeingang eine kleinere Dichte von Zonen von geschwächtem Material (51) als genannte Außenhüllschicht (41) angepasst zum Stromausgang umfasst.

3. Portionspackung (1) gemäß Anspruch 1 oder 2 **dadurch gekennzeichnet, dass** genannte Zonen von geschwächtem Material (51, 61) sich entlang einer einzelnen Richtung erstrecken und die Form eines geradlinigen Segments haben oder sich in einer begrenzten lokalen Umgebung erstrecken und eine kreisförmigen Form haben.

4. Portionspackung (1) gemäß einer der Ansprüche 1 bis 3 **dadurch gekennzeichnet, dass** genannte Zonen von geschwächtem Material (51, 61) in einem rechteckigen oder kreisförmigen Form vorhanden sind.

5. Portionspackung (1) gemäß einer der Ansprüche 1 bis 4 **dadurch gekennzeichnet, dass** genannte Zonen von geschwächtem Material (51, 61) über mindestens teils, vorzugsweise größtenteils der Oberfläche von entsprechender Außenhüllschicht (31, 41) vorhanden sind.

6. Portionspackung (1) gemäß einer der Ansprüche 1 bis 5 **dadurch gekennzeichnet, dass** genannte Zonen von geschwächtem Material (51, 61) so angepasst sind, um ein Stromkanal mit einer eigenartigen Dimension im Abstand von 0,1 mm bis 20 mm, vorzugsweise im Abstand von 0,5 mm bis 10 mm zu versorgen.

7. Portionspackung (1) gemäß einer der Ansprüche 1 bis 6 **dadurch gekennzeichnet, dass** genannte Zonen von geschwächtem Material (51, 61) als lokalisierte Schwäche von der entsprechenden Außenhüllschicht (31, 41) vorhanden sind, vorzugsweise mit Verminderung der Dichte (e) der entsprechenden Außenhüllschicht (31, 41), vorzugsweise vorhanden an der Seite, die entsprechend stromaufwärts bezüglich der Stromrichtung gerichtet ist.

8. Portionspackung (1) gemäß einer der Ansprüche 1 bis 7 **dadurch gekennzeichnet, dass** genannte Zonen von geschwächtem Material (51, 61) durch Materialentfernung und/oder Materialverschiebung von der entsprechenden Außenhüllschicht (31, 41) vorhanden sind, vorzugsweise mit Materialansammlung in einer auffälligen Art bezüglich der umliegenden Außenoberfläche, entlang größtenteils der Kantenerweiterung vom Hohlraum, wobei der genannte Zonen des geschwächten Materials (51, 61) definiert.

9. Portionspackung (1) gemäß einer der Ansprüche 1 bis 8 **dadurch gekennzeichnet, dass** genannte Zonen von geschwächtem Material (51, 61) mit einem trapezförmigen Querschnitt vorhanden sind, vorzugsweise mit einengendem Schnitt entlang der Stromrichtung.

10. Portionspackung (1) gemäß einer der vorigen Ansprüche 1 bis 12 **dadurch gekennzeichnet, dass** genannte Außenhüllschichten (31, 41) mit einer ähnlichen Form und Dimension in Folioformat vorhanden sind, vorzugsweise in einem verschiedenen Material, in dem vorzugsweise eine größere Härte im Falle der Außenhüllschicht (31) dargestellt wird, angepasst für den Stromeingang.

11. Portionspackung (1) gemäß einer der vorigen Ansprüche **dadurch gekennzeichnet, dass** genannte Bauelemente (3, 4) in einem individualisierten Format vorhanden sind, das Einzelportionspackungen (1) entspricht, oder in einem streifenartigen Format vorhanden sind, das einer Vielzahl von Einzelportionspackungen (1') vorhanden auf einer gemeinsamer Stütze entspricht.

12. **System (20)** zur Getränkezubereitung umfassend mindestens zwei Portionspackungen (1a, 1b) gemäß einer der vorigen Ansprüche 1 bis 11 und umfassend eine ähnliche Form und Dimension, und mindestens eine Maschine zur Getränkezubereitung (10) umfassend mindestens ein Anzapfgerät (7) angepasst zur Einspritzung von Druckflüssigkeit an genannte Portionspackungen (1a, 1b) und zur Ansammlung vom ergebenden GetränkeStrom,
**dadurch gekennzeichnet,**
**dass** genannte Portionspackungen (1a, 1b) Zonen von geschwächtem Material (51, 61) von verschiedener Form und/oder Dichte an entsprechende Seiten umfassen, angepasst zur Eingang und Ausgang der Druckflüssigkeit so, um entsprechend verschiedene Getränke oder mit entsprechend verschiedenen Eigenschaften vorzubereiten.

13. **Vorgang** zur Getränkezubereitung von einer Portionspackung (1) gemäß einer der vorigen Ansprüche 1 bis 11 in einem System von Getränkezubereitung (20) gemäß Anspruch 12 **dadurch gekennzeichnet, dass** die folgenden Schritte umfasst:
- Versorgung von Portionspackung (1) an einem Anzapfgerät (7), so dass die Betätigungsteile (8, 9) von genanntem Anzapfgerät (7) in der Oberfläche mit entsprechenden Bauelemente (3, 4) von genannter Portionspackung (1) verbinden können,
- Einspritzen des Flüssigkeitsstromes bei davor definierter Temperatur und Druck, so um mit den Hüllschichten (31, 41) von genannter Portionspackung (1) aufeinanderfolgend zusammenzuwirken,
- Ableitung des ergebenden Getränks,
- Ableitung der genannten Portionspackung (1) aus genanntem Anzapfgerät (7),
wobei die Stromzusammenwirkung mit der Außenhüllschicht (31) angepasst für den Stromeingang bei solch einem Druck vorhanden ist, größer als der Luftdruck, so um das Zerspringen der Zonen des geschwächten Materials (51) zu betätigen und dadurch in Stromdurchgänge zu ergeben durch ein entsprechendes Bauelement (3), und die Stromzusammenwirkung mit der Außenhüllschicht (41) angepasst für den Stromausgang bei solch einem Druck vorhanden ist, größer als der Luftdruck, so um das Zerspringen der Zonen des geschwächten Materials (61) zu betätigen und dadurch in Stromdurchgänge zu ergeben durch ein entsprechendes Bauelement (4) **dadurch gekennzeichnet, dass** die Stromzusammenwirkung ergeben vom Zerspringen von genannten Zonen von geschwächtem Material (51) vorhanden an genannte Außenhüllschicht (31), angepasst für den Stromeingang, ist anders von der Stromzusammenwirkung ergeben vom Zerspringen von genannten Zonen von geschwächtem Material (61) vorhanden an genannte Außenhüllschicht (41), angepasst für den Stromausgang.

14. Vorgang gemäß Anspruch 13 **dadurch gekennzeichnet, dass** der Betätigungsdruck erforderlich zum genannten Zerspringen der Zonen vom geschwächten Material (61) vom Bauelement (4) am Ausgang ähnlich oder größer ist als der Betätigungsdruck erforderlich zum genannten Zerspringen der Zonen vom geschwächten Material (51) vom Bauelement (3) am Eingang, so dass die Zusammenwirkung vom Stromdruck mit dem Bauelement (4) am Ausgang länger aushält.

15. Vorgang gemäß Ansprüche 13 oder 14 **dadurch gekennzeichnet, dass** Stromdurchgänge nur vorhanden sind, solange genannter Druck höher als der Luftdruck herrscht.

## Revendications

1. **Emballage portion (1)** adapté à la préparation d'un produit et configuré afin de fournir un volume interne pour une portion (2) d'au moins une substance consommable et présentant deux éléments de construction (3, 4) de forme et de dimension similaires, comprenant des couches d'enveloppe externe respectives (31, 41), adaptés à l'entrée et à la sortie d'un écoulement de fluide pressurisé, respectivement, **caractérisée par le fait que**
les deux couches d'enveloppe externe (31, 41) présentent une pluralité de zones à matériau affaibli (51, 61) et ladite couche de l'enveloppe externe (31) qui est adaptée au côté de l'entrée de l'écoulement, présentent des zones de matériau affaibli (51) de forme différente et/ou dans une densité différente des zones de matériau affaibli (61), disposée sur la couche de l'enveloppe externe (41) qui est adapté au côté de la sortie de l'écoulement.

2. Emballage portion (1) selon la revendication 1, **caractérisé par le fait que** la couche de l'enveloppe externe (31) adaptée au côté de l'entrée de l'écoulement présente une densité mineure des zones de matériau affaibli (51) par rapport à la couche de l'enveloppe externe (41) adaptée au côté de la sortie de l'écoulement.

3. Emballage portion (1) selon la revendication 1 ou 2, **caractérisé par le fait que** lesdites zones de matériau affaibli (51, 61) se développent le long d'une unique direction présentant la forme d'un segment de ligne, ou se développent dans une zone locale confinée, présentant une forme circulaire.

4. Emballage portion (1) selon une quelconque revendication entre 1 et 3, **caractérisé par le fait que** lesdites zones de matériau affaibli (51, 61) sont disposées sous une forme circulaire ou rectangulaire.

5. Emballage portion (1) selon une quelconque revendication antérieure entre 1 et 4, **caractérisé par** lesdites zones de matériau affaibli (51, 61), disposées sur au moins en partie, de préférence la plupart de la surface de la couche de l'enveloppe externe respective (31, 41).

6. Emballage portion (1) selon une quelconque revendication antérieure entre 1 et 5, **caractérisé par le fait que** lesdites zones de matériau affaibli (51, 61) sont adaptées afin de fournir un passage d'écoulement d'une dimension caractéristique dans l'intervalle compris entre 0,1 mm et 20 mm, de préférence dans l'intervalle compris entre 0,5 mm et 10 mm.

7. Emballage portion (1) selon une quelconque revendication antérieure entre 1 et 6, **caractérisé par le fait que** lesdites zones de matériau affaibli (51, 61) sont fournies en tant qu'affaiblissement localisé de la couche de l'enveloppe externe respective (31, 41), de préférence avec une réduction de l'épaisseur (e) de la couche de l'enveloppe respective externe (31, 41), de préférence disposée sur le côté, respectivement orienté en amont relativement à la direction de l'écoulement.

8. Emballage portion (1) selon une quelconque revendication antérieure entre 1 et 7, **caractérisé par le fait que** les zones de matériau affaibli (51, 61) sont fournies en retirant le matériau et/ou en déplaçant le matériau de la respective couche de l'enveloppe externe (31, 41), de préférence avec l'accumulation du matériel de forme saillante, relativement à la surface externe environnante, le long d'au moins la plupart de l'extension des bords de la cavité, définissant lesdites zones du matériau affaibli (51, 61).

9. Emballage portion (1) selon une quelconque revendication antérieure entre 1 et 8, **caractérisé par le fait que** lesdites zones de matériau affaibli (51, 61) sont fournies avec une section en croix de type trapèze, de préférence avec une section de rétrécissement le long de la direction de l'écoulement.

10. Emballage portion (1) selon une quelconque revendication antérieure entre 1 et 12, **caractérisé par le fait que** les couches de l'enveloppe externe (31, 41) sont fournies sous une forme et une dimension similaires, dans un format de type folio, de préférence dans un matériau différent, présentant de préférence une rigidité plus importante dans le boîtier de la couche de l'enveloppe externe (31) adaptée au côté de l'entrée de l'écoulement.

11. Emballage portion(1) selon une quelconque revendication antérieure, **caractérisé par le fait que** les éléments de construction (3, 4) sont fournis sous un format individualisé correspondant à des emballages à portion individuelle (1) ou sont fournis sous un format de type bande, correspondant à une pluralité d'emballages à portion individuelle (1'), fournis sur un support commun.

12. **Système (20)** pour la préparation de breuvages, comprenant au moins deux emballages portion (1a, 1b), comme mentionné dans une quelconque revendication antérieure entre 1 et 11 et présentant une forme et une dimension similaire et au moins une machine pour la préparation de breuvages (10), y compris au moins un dispositif d'extraction (7) adapté à l'injection de l'écoulement pressurisé dans les emballages portion (la, lb) et recueillant l'écoulement du breuvage qui en résulte,
**caractérisé par**
**le fait que** lesdits emballages portion (1a, lb), présentent des zones de matériau affaibli (51, 61) de forme et/ou de densité différentes sur les côtés respectifs adaptés à l'entrée et à la sortie de l'écoulement pressurisé, afin de préparer respectivement différents breuvages ou ayant des caractéristiques respectivement différentes.

13. **Processus** de préparation d'un breuvage depuis un emballage portion (1) mentionné dans une quelconque revendication entre 1 et 11 dans un système de préparation de breuvages (20) mentionnés dans la revendication 12, **caractérisé par le fait qu'**il inclut les étapes suivantes :
- alimenter avec un emballage portion (1) à un dispositif d'extraction (7), afin que les parties d'actionnement (8, 9) dudit dispositif d'extraction (7) puissent s'engager sur la surface avec les éléments de constructions respectifs (3, 4) dudit emballage portion (1),
- injecter un écoulement de fluide à une température préalablement définie, afin d'interagir successivement avec les couches d'enveloppe (31, 41) dudit emballage portion (1)
- déchargeant le breuvage qui en ressort,
- déchargeant ledit emballage portion (1) hors dudit dispositif d'extraction (7),
où l'interaction de l'écoulement avec la couche de l'enveloppe externe (31) adaptée au côté de l'entrée de l'écoulement est fournie à une pression plus importante que la pression atmosphérique, afin d'actionner la rupture des zones du matériau affaibli (51), y résultant en un passage de l'écoulement à travers l'élément de construction respectif (3) et l'écoulement de l'interaction avec la couche de l'enveloppe externe (41) adaptée au côté de la sortie de l'écoulement est fournie à une pression plus importante que la pression atmosphérique, afin d'actionner la rupture des zones de matériau affaibli (61), résultant ainsi en un passage de l'écoulement à travers l'élément de construction respectif (4),
**caractérisé**
**par le fait que** l'écoulement de l'interaction, découlant de la rupture des dites zones de matériau affaibli (51), fourni sur la couche de l'enveloppe externe (31) adaptée au côté de l'entrée de l'écoulement est différent de l'écoulement de l'interaction issu de la rupture des dites zones de matériau affaibli (61), fourni sur la couche de l'enveloppe externe (41), adaptée au côté de la sortie de l'écoulement.

14. Processus selon la revendication 13, **caractérisé par le fait que** la pression d'actionnement requise pour ladite rupture des zones de matériau affaibli (61) de l'élément de construction (4) sur le côté de la sortie est similaire ou plus importante que la pression d'actionnement requise pour ladite rupture des zones de matériau affaibli (51) de l'élément de construction (3), sur le côté de l'entrée, afin que l'interaction de l'écoulement pressurisé avec l'élément de construction (4) sur le côté de la sortie dure plus longtemps.

15. Processus selon les revendications 13 ou 14, **caractérisé par le fait que** lesdits passages de l'écoulement sont uniquement fournis aussi longtemps que prévaut ladite pression plus importante que la pression atmosphérique.
